# EUROPEAN PATENT APPLICATION

(11) **EP 1 439 665 A2**
(43) Date of publication of application: **21.07.2004**
(21) Application number: 04000356.8
(22) Date of filing: 09.01.2004
(51) Int. Cl.: H04L 12/26

(54) **Method of judging communication stability of network system and master unit, slave and repeater therefor**

(30) Priority: 14.01.2003 JP 2003006410; 08.01.2004 JP 2004002804
(71) Applicant: Omron Corporation, Kyoto-shi, Kyoto 600-8530 (JP)
(72) Inventor: Kojima, T., Omron Corp., 801 Minamifudodo-cho, Kyoto-shi, Kyoto 600-8530 (JP); Mizutani, Seiji, Omron Corp., 801 Minamifudodo-cho, Kyoto-shi, Kyoto 600-8530 (JP)
(74) Representative: Kilian, Helmut, Dr.

(57) **Abstract**

A method of judging communication stability is provided for a network system including a master unit forming a programmable controller and a slave connected to a network. The master unit transmits to the slave a distorted test pattern formed by distorting a standard test pattern to a specified distortion level. If this distorted test pattern is normally received by the slave, a response is returned from the slave to the master unit. If the mater unit receives this response normally, it is judged that this network system has communication stability corresponding to this specified distortion level.

## Description

### Background of the Invention

This invention relates to a method of judging communication stability as well as a master unit, a slave and a repeater of a network system.

Programmable controllers used in factory automation are adapted to input on/off data of various input apparatus such as switches and sensors and to carry out logical calculations according to a sequence program (or a user program) written, for example, in the ladder language. The results of such calculations are used by the programmable controller (PLC) which serves to carry out various controls by outputting signals on the on/off data to output apparatus such as relays, valves and actuators.

A PLC of this kind may be formed with a plurality of electrically and mechanically connected units each produced for a specific function. Examples of such units include a power source unit, a CPU unit, an I/O unit and a master unit.

The master unit is connected to a control network such as a field bus so as to be able to communicate through this control network with slaves of different kinds connected thereto. A remote IO is an example of a slave. Although the aforementioned input and output apparatus may be connected to an I/O unit of a PLC, if all of them are directly connected to the I/O unit, the number of wires connecting these input and output apparatus with the I/O unit increases accordingly but it is not desirable to have too many wires stretched out inside a factory, all starting from the PLC (or its I/O unit). Thus, a remote IO is set near each object of control for serving as a terminal table for connecting these input and output apparatus. Each of such IO units is connected to a network cable (communication line) connected to the PLC (or its master unit). I/O data are sent back and forth between the PLC and each remote IO through a master-slave communication such that data are communicated with the input and output apparatus through such remote IOs.

Communication speed by network systems using a field bus is also being increased with faster control and shortened cycle times of PLCs. Many restrictions and limitations are therefore being imposed regarding the attachment of a terminal resistor at the end of a field bus, as well as on the type of cables for communication lines, wire lengths and the forms of branching in order to limit the disturbance on the waveforms due to reflections.

It is difficult for the user, however, to check whether or not such restrictions and limitations are correctly being applied. It is therefore frequently the case that a violation such as a wire error is discovered after an abnormal situation is detected and while its cause is being investigated. Even if there is no visible trouble such as a failure in communication, there may be situations where the environment of communication is less than acceptable such that data cannot be communicated at the first attempt and many retries are frequently needed. Such a situation is often difficult to detect.

Japanese Patent Publication Tokkai 7-36793 (in Paragraphs 0007, etc.) disclosed a bus monitoring device for monitoring the effective time of signal lines on a bus, comparing them with the standard time value of the effective time of each preliminarily set signals, thereby determining whether or not they are within the standard time value, and reporting a trouble to a bus master device if not within the standard time value. Thus, non-digital bugs can be quickly discovered at the time of the system design and a system with high reliability at the time of the actual operation can be structured. With such a monitor, the condition of the system can be judged to a certain extent but the actual level of the field bus such as what is the margin of safety before the communication becomes impossible to carry out cannot be learned.

Moreover, even if the user is aware of all of the restrictions and limitations, wire materials of many different kinds will have to be in storage in order to comply with all of the restrictions and limitations. This increases the cost of operation and the user may be tempted to use some of the items already in the storage as substitutes but aforementioned Japanese Patent Publication Tokkai 7-36793 does not make it clear whether any substitution may be allowed

### Summary of the Invention

It is therefore an object of this invention to provide a method of judging communication stability of a network system such that safety (reliability) of its communication, whether or not its wire materials can be substituted and its resistance against noise can be determined.

It is another object of the invention to provide a master unit, slaves and repeaters for such a network system.

The invention relates to a method of judging communication stability of a network system formed, say, with a master unit comprising a programmable controller and a slave connected to a network. The master unit is adapted to transmit to the slave a distorted test pattern obtained by distorting a standard test pattern at a specified distortion level. The slave is adapted to return a response to the master unit if the distorted test pattern is normally received. If this response is normally received, the master unit makes the judgment that there is communication stability corresponding to (indicated by) the level of distortion.

In the above, the standard test pattern is a pattern with a waveform normally used for communication. If such a standard test pattern is transmitted to the slave in a distorted form, it is likely to result in communication abnormality. So, if such a distorted pattern can be received normally, this means that the communication stability is high and that the safety margin is accordingly sufficiently wide. Thus, if the checking process is carried out by setting the distortion level appropriately, it is possible to determine whether or not the actual network with wirings satisfies any required standard and to prevent the occurrence of abnormal communications due to a wiring error. In the case of a field bus, there are restrictions and limitations regarding the wire material, etc. in order to safeguard communications. If the level of communication stability corresponding to such restrictions and limitations can be ascertained, a test pattern distorted to a level corresponding to such communication stability may be used for the test and the user can determine whether or not any of the available materials in the inventory may be used. For example, if a material not specified by the maker is used to build a network, such a network may be tested by using a test pattern distorted to the level corresponding to the required level of communication stability to determine whether or not the substitute material may be safely used.

Only one distortion level may be used. Instead, a plurality of distortion levels may be provided. Correspondingly, test patterns distorted to different levels may be sequentially transmitted from the master to the slave. Then, the method will further include the steps of determining a boundary, beyond which communication from the master unit to the slave becomes impossible, on the basis of whether or not there is a response from the slave to the test pattern distorted to each of the specified distortion levels, and determining the communication stability on the basis of this boundary.

The slave may be further characterized as being adapted to return a response according to the specified distortion level of the distorted test pattern received from the master unit such that communication stability can be checked in both directions.

The invention further relates to a network system of the kind further including a repeater connected between the master unit and the slave. The repeater is a kind of slave adapted to carry out waveform shaping on the distorted test pattern to form a corrected signal and to output this corrected signal after distorting it according to the specified distortion level. According to this invention, communication stability of network systems of this kind can also be checked accurately.

In the above, the distorted test pattern may be generated by changing the duty ratio of a standard test pattern. In other word, waveforms can be distorted digitally by changing the duty ratio and this can be carried out by an ASIC. The duty ratio may be changed, for example, by changing the timing of the rise or fall of a pulse such that the standard test pattern can be digitally distorted. The waveform may also be distorted in an analog manner.

If the message transmitted from the master unit to the slave is comprised of the addressee's address, the sender's address, a command, a data row and a frame check sequence (FCS), for example, what is herein referred to as the standard test pattern is the specified pattern of the data row, such as 01011010. Methods of distorting a standard test pattern include both those of distorting the entire message and those of distorting only its data row. In the case of a method of distorting only the data row, it is done by inserting a FCS between the command and the data row of the message. The standard test pattern may be selected appropriately according to the type of cables for communication lines, wire lengths and the forms of branching.

The invention further relates to components of a network system with which the methods as described above may be utilized. A master unit according to this invention may be characterized as forming a programmable controller and comprising transmitting means for transmitting a distorted test pattern to a slave connected to the same network where the distorted test pattern is formed by distorting a standard test pattern to a specified distortion level and judging means for judging that the network has communication stability corresponding to the specified distortion level if this master unit normally receives from the slave a response which is expected to return the response when the distorted test pattern is received normally.

A slave embodying this invention suited for carrying out the method of this invention may be characterized as being connected to a network together with a master unit forming a programmable controller and comprising judging means for judging whether or not a distorted test pattern distorted to a specified distortion level and transmitted from the master unit through the network has been received normally, distorting means for distorting a response according to the specified distortion level if the distorted test pattern has been normally received and returning means for returning the distorted response to the master unit.

A repeater embodying this invention suited for carrying out the method of this invention may be characterized as being a part of a network system including a master unit, a slave and one or more repeaters between the master unit and the slave and comprising waveform shaping means for carrying out waveform shaping on a distorted test pattern distorted to a specified distortion level and sent from the master unit and outputting means for distorting the waveform-shaped test pattern according to the specified distortion level and outputting the distorted waveform-shaped test pattern.

### Brief Description of the Drawings

Fig. 1 is a block diagram of a network system embodying this invention.
Fig. 2 is a block diagram showing the inner structure of the master unit of Fig. 1.
Fig. 3 is a block diagram showing the inner structure of a slave of Fig. 1.
Fig. 4 is a drawing for showing a test pattern and distortion levels.
Figs. 5 and 6 are drawings for showing methods of distorting a test pattern.
Fig. 7 is a flowchart of a process of this invention for checking communication stability.
Fig. 8 is a block diagram of another network system embodying this invention.
Fig. 9 is a block diagram showing the inner structure of a repeater.

### Detailed Description of the Invention

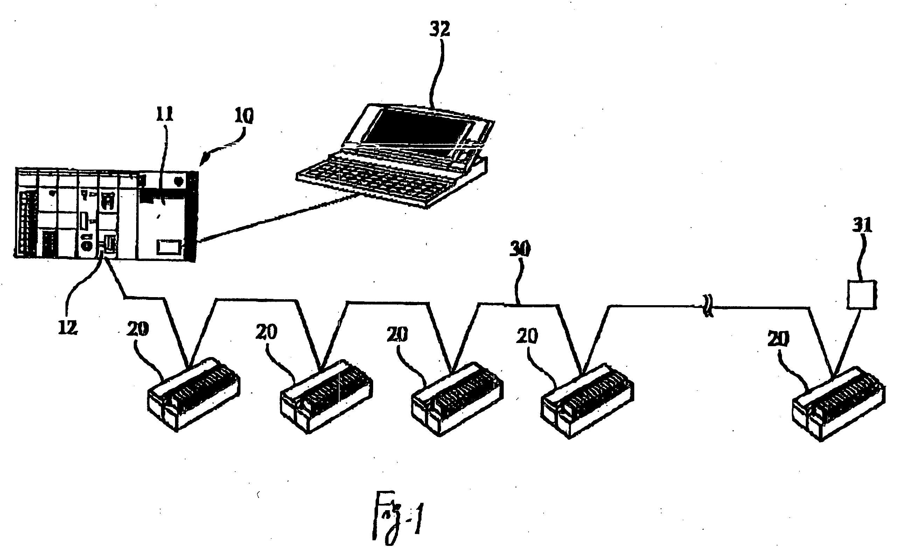

As shown in Fig. 1, a network system embodying this system may be formed by connecting a PLC 10 and slaves 20 of different kinds including a remote IO through a field bus 30. The field bus 30 is of the type having the slaves 20 connected in series. For this reason, the field bus 30 has a terminal resistor 31 connected at the end. The PLC 10 has a personal computer 32 connected thereto to serve as a setting tool capable of providing a test pattern (to be described below) to the PLC 10.

The PLC 10 is formed by connecting individual units such as a CPU unit 11 and a master unit 12 each produced for a specified function. The master unit 12 is connected to the field bus 30 and is adapted to carry out communications with each of the slaves 20. It is further adapted to access the IO memory of the CPU unit 11 through an inner bus of the PLC 10 to read and write IO data.

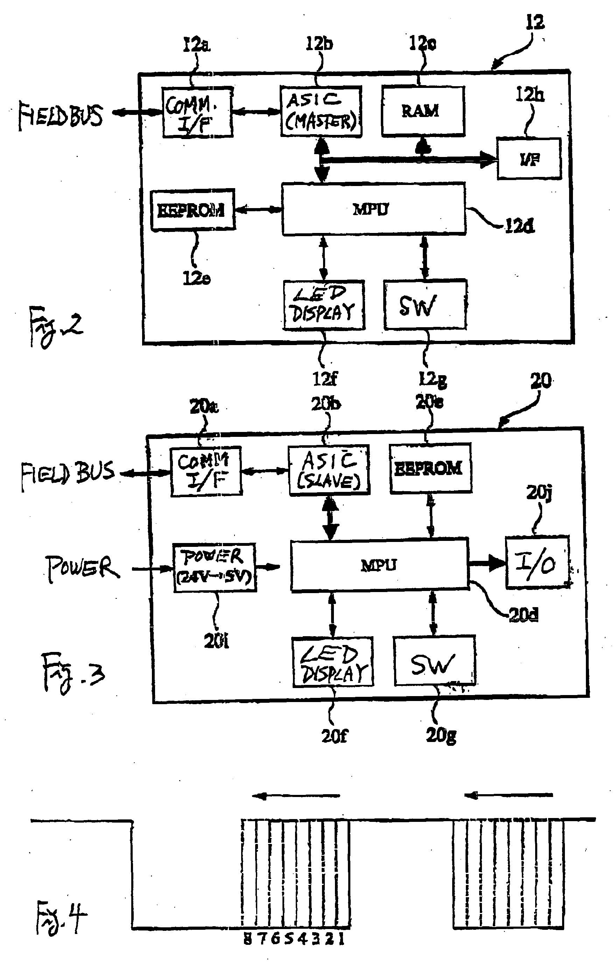

The master unit 12 is connected to the field bus, as shown in Fig. 2 and is provided with a communication interface (COMM I/F) 12a for actually transmitting and receiving data, an ASIC (for the master) 12b for carrying out master-slave communications through the communication interface 12a, transmitting and receiving I/O data to and from the slaves 20, transmitting specified commands and receiving responses based thereupon, a MPU 12d for carrying out various controls, a RAM 12c used as a work area when controls of different kinds are carried out, an EEPROM 12e storing programs for carrying these controls and various kinds of set data, an interface (I/F) 12h for carrying out communications with other units, a LED display device 12f for displaying the status of operation (communication status) and abnormal/normal condition, and a set switch (SW) 12g for setting addresses, etc. Its basic hardware structure will not be described in detail because it is similar to that of a prior art master unit.

The controls carried out by the MPU 12d include communications with the CPU unit 11 and other units and operations of the ASIC 12b. Explained more in detail within the context of this invention, it has the function of using a standard test pattern sent from the personal computer 32 through the CPU unit 11 to communicate with the slaves connected to the field bus for testing stability of communication. Explained still more in detail, it serves to transmit the standard test pattern to the ASIC 12b, to have it distorted by the ASIC 12b and to have it sent to a specified one of the slaves 20. Stability of communication is judged on the basis of presence or absence of a response from the slave to which the test pattern was transmitted. A detailed account of this process will be presented below.

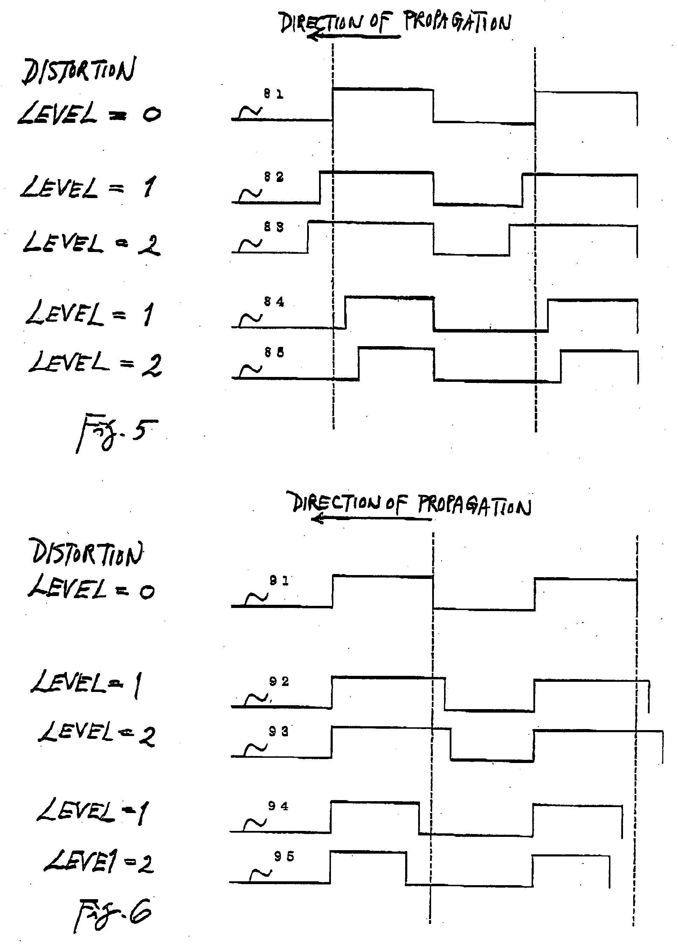

The slave 20 is connected to the field bus, as shown in Fig. 3 and is provided with a communication interface (COMM I/F) 20a for actually transmitting and receiving I/O data and messages of different kinds with the master unit 12, an ASIC (for the slave) 20b for carrying out master-slave communications obtained through the communication interface 12a, transmitting and receiving I/O data, receiving specified commands and transmitting responses based thereupon, a MPU 20d for carrying out various controls, an EEPROM 20 storing various kinds of set data and IO data, an I/O part 20j connected to I/O apparatus to transmit and receive I/O data, a LED display device 20f for displaying the status of operation (communication status) and abnormal/normal condition, and a set switch (SW) 20g for setting node addresses, etc. There is further provided a power source 20i serving to lower the input voltage (24V) to 5V and to supply power to each element inside the slave 20. Its basic structure and effects of operations will not be described in detail because they are similar to those of prior art slaves.

Explained within the context of this invention, the slave 20 has the function of not only analyzing a test pattern addressed to itself, when it is received, but also issuing a specified response and returning it to the master unit 12. The response will be transmitted in a distorted form with the level of distortion matched between the master and the slave. In other words, the master transmits information on the level of distortion when or before the distorted test pattern is transmitted, and the slave 20 is adapted to recognize this level of distortion and distorts its own response in the same level.

As a result, when a test pattern has been issued to a certain node address, the master unit 12 (or the personal computer 32) can judge not only presence or absence of a slave with this node address but also the stability of communication on the basis of the presence or absence of a response. In other words, communications may be made to a same slave 20 by increasing the level of distortion on a test pattern gradually in order to ascertain the maximum level of distortion with which communication is still possible such that the stability of communication can be ascertained from such level. If there is no response from the first time as the test pattern is sent, it may be concluded that there is no slave with that node address.

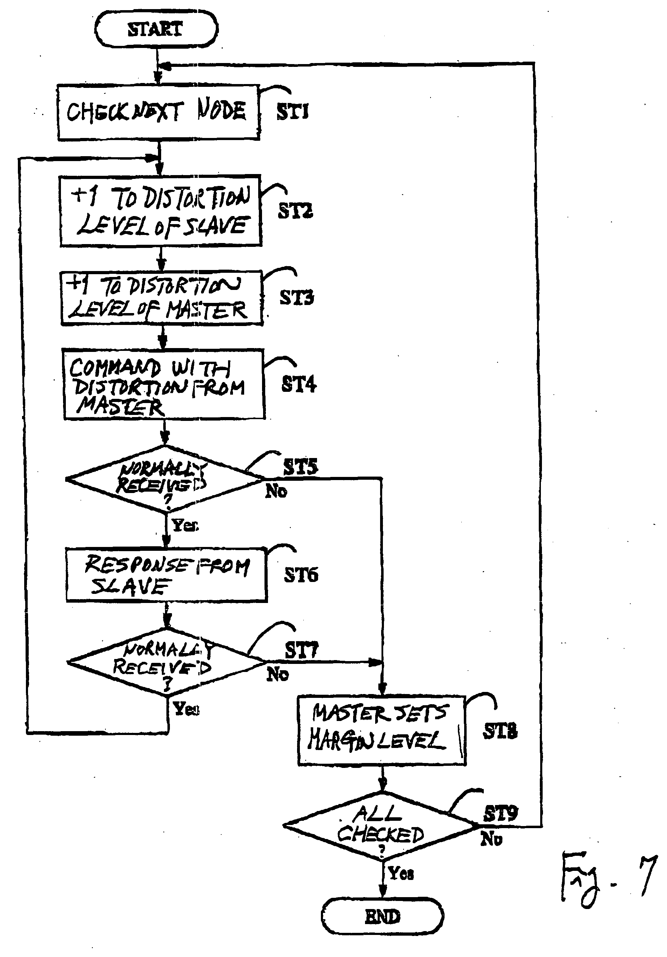

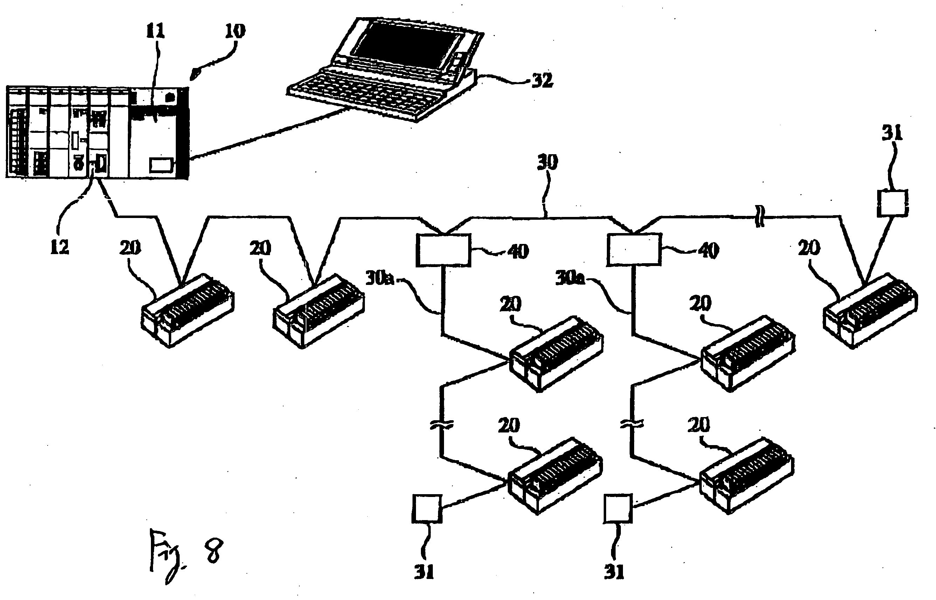

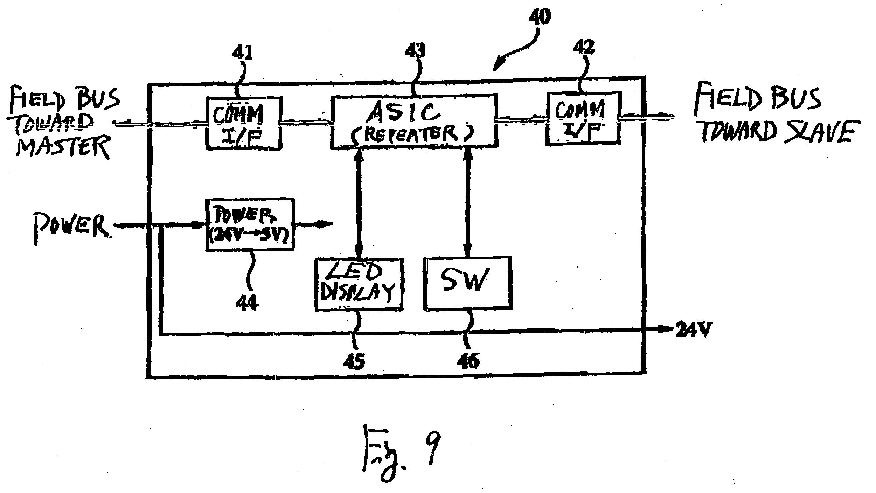

For example, test patterns may be created from an undistorted pulse wave pattern by varying the width of its LOW signal portions as shown in Fig. 4. Such methods of creating test patterns will be explained next more in detail with reference to Figs. 5 and 6.

Fig. 5 shows an example of method of creating test patterns by changing the width of the LOW signals portions of Waveform 81 of an ordinary transmission wave without distortion (distortion level = 0) at the times of its rise (shown by broken lines). If the LOW signal portion is divided into an integral number of segments as shown in Fig. 4 and the width of the LOW signal portion is reduced by one of such divided segments at each rise of the pulse wave, Waveform 82 (with distortion level = 1) is obtained. Similarly, Waveform 83 (with distortion level = 2) is obtained if the LOW signal portion is reduced by two divided segments. Waveform 84 (with distortion level = 1) is obtained by increasing the width of the LOW signal portions at the times of rise of Waveform 81 by one of the divided segments, and Waveform 85 (with distortion level = 2) is similarly obtained by increasing the width of the LOW signal portions at the times of rise of Waveform 81 by two of the divided segments.

Fig. 6 shows an example of method of creating test patterns by changing the width of the LOW signal portions of Waveform 91 (the same as Waveform 81 and with distortion level = 0) at the times of its fall (shown by broken lines). If the LOW signal portion is divided into an integral number of segments as shown in Fig. 4 and the width of the LOW signal portion is reduced by one of such divided segments at each fall of the pulse wave, Waveform 92 (with distortion level = 1) is obtained. Similarly, Waveform 93 (with distortion level = 2) is obtained if the LOW signal portion is reduced by two divided segments. Waveform 94 (with distortion level = 1) is obtained by increasing the width of the LOW signal portions at the times of fall of Waveform 91 by one of the divided segments, and Waveform 95 (with distortion level = 2) is similarly obtained by increasing the width of the LOW signal portions at the times of fall of Waveform 91 by two of the divided segments.

Methods of distortion as illustrated above are convenient for a logical circuit such as a digital ASIC and hence the functions desired for the present invention can be provided easily and inexpensively to the apparatus connected to the field bus 30.

According to the example shown in Fig. 4, the LOW portion of the pulse is divided into eight segments and the LOW portion is reduced sequentially by one segment such that the rise from the LOW level to the HIGH level comes accordingly sooner. The level of distortion is increased by 1 every time one of the divided segments is eliminated. The condition with no distortion is defined Level 0 and the level of distortion is sequentially increased to 1, 2, etc. Level 8 is the highest, corresponding to all segments in the HIGH level at which signal reception is not possible.

Although an example was shown with reference to Fig. 4 wherein the time of a shift from the LOW level to the HIGH level was shifted each time by a time segment equal to 1/8 of the LOW portion of the pulse, this fraction may be varied appropriately. Although the time for a rise was shifted to the earlier side according to the example described above, it may be shifted to the later side (delayed) instead.

The criterion for communication stability may be based on the following two conditions: (1) As the master unit 12 transmits a test pattern with a distortion of a specified level, the slave is capable of receiving it; and (2) The slave 20 transmits a response with the same waveform with a distortion of the same level. This is repeated to the same slave 20 by increasing the level of distortion each time and the level immediately before these two conditions cease to become satisfied is the level of communication stability to this slave.

As the process described above is carried out with all of the slaves, communication stability with all of the slaves can be obtained. The overall communication stability of the field bus system is defined by the lowest of the stability levels of the slaves. If the stability levels of the individual slaves are compared among themselves, the portion of the system with the lowest stability level, where it is most likely that some of the restrictions and limitations on the field bus (such as the type of the cable of the communication line and wire lengths) may not be satisfied, can be identified easily and at an early stage.

Since the circuit condition may be unstable due to noise, etc., the checking on each slave for communication stability should preferably be carried out more than once and by taking average values or other data such as the maxima and minima of the margin levels.

Fig. 7 shows an example of a process according to this invention. To start, the object on which the process is to be carried out is shifted to the next node (slave) (Step ST1). If the slaves are to be checked in the order of their node addresses, the slave with node address #0 becomes the first object. Thereafter, when the process returns next to Step ST1 after completing the subsequent steps (Steps ST2, etc.), the slave with node address #1 becomes the next object of the checking process. This continues on sequentially to #2, #3, etc. until the node with the largest node address is processed and then the process is completed. Another method of determining the next node to be processed would be to first determine the node addresses of the slaves currently being connected and to make only the slaves currently being connected as the objects of processing.

After the slave to be processed is determined, the master unit 12 uses its message to tell this slave 20 to change the currently set level of distortion by +1 (Step ST2). Receiving this message, the slave adds +1 to the currently set level of distortion (Step ST3). Since the distortion level is 0 under a normal condition, the distortion level becomes 1 after the first message. Thereafter, the distortion level increases to 2, 3, etc. Instead of increasing the distortion level by +1 each time, a definite distortion level such as Level 3 and Level 5 may be set.

Next, the distortion level on the side of the master unit 12 is also increased by +1 (Step ST3) such thatthe distortion levels of both the slave 20 and the master unit 12 become equal. Thereafter, the master unit 12 transmits as a command a test pattern distorted to the current level to the slave 20, which is now the object of processing (Step ST4) and judges whether this was received normally by the slave 20 (Step ST5). This judgment is made by monitoring for a response from the slave corresponding to the test pattern transmitted in Step ST4 as a command.

If there is no corresponding response from the target slave, it is concluded that the pattern was not normally received (NO in Step ST5) and the master unit 12 determines the margin level (communication stability) for this slave on the basis of the current distortion level (Step ST8). In other words, the value obtained by subtracting 1 from the current distortion level becomes the distortion level at which communication is still possible and this level is defined as the margin level (or communication stability).

If the slave 20 receives the pattern normally (YES in Step ST5), the slave 20 transmits a response to the master unit 12 by distorting this response at the current level (Step ST6)

In the meantime, the master unit 12 is waiting for a distorted response from the slave 20 and then judges whether or not the response is received normally (Step ST7). If the response is normally received (YES in Step ST7), the process returns to Step ST2 and the processes described above are repeated after the distortion level is increased by one step. If the master unit 12 does not receive any response for a specified length of time after a command is issued, it concludes that there was no normal reception (NO in Step ST7) and determines the margin level for this slave 20 on the basis of the current distortion level (Step ST8).

Even with a normal field bus system, communication becomes impossible at the maximum distortion level (Level 8 in the present example). Communication may become impossible even at a lower level such as Level 7 or Level 6. Thus, the process of checking each slave always ends in a condition where no normal communication is possible either on the side of the slaves or on the side of the master unit. After all nodes have been checked (YES in Step ST9), the process is ended.

Fig. 8 shows another network system embodying this invention having repeaters 40 included in the field bus 30. In other words, this network system is formed with a PLC 10 and different kinds of slaves 20 and repeaters 40 connected through the field bus 30. Some of the slaves 20 are directly connected to the field bus 30 connected to the PLC 10 while some of them are connected to a field bus 30a connected to one of the repeaters 40 so as to communicate with the PLC 10 through that repeater 40. At the end of each of the field buses 30 and 30a is a terminal resistor 31. Inner structure and the function of the master unit 12 and the slaves 20 are basically the same as explained above with reference to Fig. 1.

Although Fig. 8 shows an example wherein there are only slaves on the downstream side of each repeater 40 but a repeater may be connected on the downstream side of another repeater such that there may be slaves that communicate with the PLC 10 through a plurality of repeaters.

Repeaters 40 are for relaying data transmitted through a field bus for carrying out waveform shaping, having the function of receiving a signal from one side and outputting a signal after the waveform shaping. They are adapted to carry out a waveform shaping process on both signals being transmitted from the master unit 12 to a slave 20 and those being transmitted from a slave 20 toward the master unit 12. ,

If the communication lines forming a network are made too long, not only do signal levels become lower but they also become susceptible to noises and the waveforms tend to become adversely affected, thereby increasing the possibility of inability to transmit correct information. In view of this problem, relays for serving as waveform shapers (herein referred to as the repeaters) are inserted at appropriate positions such that adulterated waveforms can be corrected and hence that the distance of transmission can be extended. A plurality of slaves may sometimes be connected to the downstream side of a repeater not only for extending the effective distance of transmission but also for the purpose of managing slaves for controlling the same device as a single group.

As shown in Fig. 9, the repeater 40 is provided with communication interfaces 41 and 42 for connection in the direction respectively of the master and of the slave(s), an ASIC 43 for the repeater mounted between the two interfaces 41 and 42 to carry out specified processing in response to data (signals) being transmitted therethrough, a power source 44 serving to lower the input voltage (24V) to 5V and to supply power to each element inside the repeater 40, a display device 45 for displaying the status of operation (communication status) and abnormal/normal condition, and a set switch (SW) 46 for setting node addresses, etc.

As explained above, the purpose of the repeater 40 is basically to correct (shape) the adulterated waveform of transmitted signals and to output signals thus corrected. Since prior art repeaters, too, are adapted to have all these functions, the structure and operations of the repeater 40 will not be explained here in any detail.

The ASIC 43 for the repeater is adapted to carry out the aforementioned waveform shaping on a signal received from whichever side and to thereafter output in the other direction a waveform that is distorted according to a specified level of distortion. When it receives a response from a specified node address as explained above, a waveform shaping process is carried out and a corrected signal that is distorted according to a stored distortion level is outputted thereafter to the master unit 12. In this manner, the quality of communication (communication stability) through the route of signal transmission between the repeater 40 and the slaves 30 connected on its downstream side can be similarly improved.

Each of the repeaters 40 is assigned a node address and hence the repeaters 40 may also be regarded as a kind of slaves. The repeater 40, if the functions of the slaves 20 described above are also incorporated therein, can serve to check the communication stability of the transmission route between the master unit 12 and itself.

This may be done by setting the node address of the repeater 40 itself in Step ST1 in the flowchart of Fig. 7. The repeater 40 sets the current distortion level of itself in a specified register (within the ASIC 43) and returns a response according to this distortion level when a signal is normally received, but if a signal is not normally received, this fact is communicated to the master unit 12, as explained above with reference to the flowchart of Fig. 7. Thus, the master unit 12 can determine the margin level (communication stability) between the repeater 40 and itself. Regarding the other components of the network system, since their structure and functions are as explained above with reference to Fig. 1, they are indicated in Fig. 8 by the same symbols and no detailed explanations will be presented repetitiously.

Although the invention has been described above with reference to only two embodiments and although both embodiments may be characterized wherein (1) if the master unit 12 transmits a test pattern that is distorted to a specified level and the slave 20 (or the repeater 40) can receive it (as judged in Step ST5 in the flowchart of Fig. 7) and (2) if the slave 20 (or the repeater 40) transmits a response that is distorted to the same level and the master unit 12 is capable of receiving it (as judged in Step ST7 of the flowchart of Fig. 7), it is judged that the communication stability is in that level of distortion, this is not intended to limit the scope of the invention. It also goes without saying that the standard test pattern need not be transmitted from a personal computer to the master unit. A plurality of standard test patterns may be saved preliminarily on the inner memory of the master unit such that one of them can be specified by operating on the personal computer.

In summary, this invention makes it possible to obtain information regarding safety (reliability) of communication through an actually established field bus such that the user can make judgments on resistance against noise and whether or not the materials of the communication lines are of a replaceable kind.

## Claims

1. A method of judging communication stability of a network system including a master unit forming a programmable controller and a slave connected to a network, said method comprising the steps of:
transmitting from said master unit to said slave a distorted test pattern formed by distorting a standard test pattern to a specified distortion level;
returning a response from said slave to said master unit if said slave receives said distorted test pattern normally; and
judging that said network system has communication stability corresponding to said specified distortion level if said master unit receives said response normally.

2. The method of claim 1 wherein a plurality of distorted test patterns are sequentially transmitted from said master to said slave, each of said distorted test patterns being formed by distorting said standard test pattern to a different one of a plurality of specified distortion levels, said method further comprising the steps of:
determining a boundary, beyond which communication from said master unit to said slave becomes impossible, based on whether or not there is a response from said slave to the distorted test pattern distorted to each of said specified distortion levels; and
determining said communication stability based on said boundary.

3. The method of claim 1 wherein said slave returns said response by distorting said response according to said specified distortion level of the distorted test pattern received from said master unit.

4. The method of claim 2 wherein said slave returns said response by distorting said response according to the one different specified distortion level.

5. The method of claim 1 wherein said network system further includes a repeater connected between said master unit and said slave, said repeater being adapted to carry out waveform shaping on said distorted test pattern to form a corrected signal and to output said corrected signal after distorting said corrected signal according to said specified distortion level.

6. The method of claim 2 wherein said network system further includes a repeater connected between said master unit and said slave, said repeater being adapted to carry out waveform shaping on said distorted test pattern to output a corrected signal and to output said corrected signal after distorting said corrected signal according to the one different specified distortion level.

7. The method of claim 3 wherein said network system further includes a repeater connected between said master unit and said slave, said repeater being adapted to carry out waveform shaping on said distorted test pattern to output a corrected signal and to output said corrected signal after distorting said corrected signal according to said specified distortion level.

8. The method of claim 4 wherein said network system further includes a repeater connected between said master unit and said slave, said repeater being adapted to carry out waveform shaping on said distorted test pattern to output a corrected signal and to output said corrected signal after distorting said corrected signal according to the one different specified distortion level.

9. The method of claim 1 wherein said distorted test pattern is generated by changing the duty ratio of said standard test pattern.

10. The method of claim 2 wherein each of said distorted test patterns is generated by changing the duty ratio of said standard test pattern.

11. The method of claim 3 wherein said distorted test pattern is generated by changing the duty ratio of said standard test pattern.

12. The method of claim 4 wherein each of said distorted test patterns is generated by changing the duty ratio of said standard test pattern.

13. The method of claim 5 wherein said distorted test pattern is generated by changing the duty ratio of said standard test pattern

14. The method of claim 6 wherein each of said distorted test patterns is generated by changing the duty ratio of said standard test pattern.

15. The method of claim 7 wherein said distorted test pattern is generated by changing the duty ratio of said standard test pattern.

16. The method of claim 8 wherein each of said distorted test patterns is generated by changing the duty ratio of said standard test pattern.

17. A master unit forming a programmable controller and being connected to a network; said master unit comprising:
transmitting means for transmitting a distorted test pattern to a slave, said distorted test pattern being formed by distorting a standard test pattern to a specified distortion level, said slave being connected to said network; and
judging means for judging that said network has communication stability corresponding to said specified distortion level if said master unit receives a response normally from said slave, said slave being adapted to return said response when said distorted test pattern is received normally.

18. A slave that is connected to a network together with a master unit forming a programmable controller, said slave comprising:
judging means for judging whether or not a distorted test pattern distorted to a specified distortion level and transmitted from said master unit through said network has been received normally;
distorting means for distorting a response according to said specified distortion level, if said distorted test pattern has been normally received; and
returning means for returning said distorted response to said master unit.

19. A repeater for a network system including a master unit, a slave and one or more repeaters including said repeater between said master unit and said slave, said repeater comprising:
waveform shaping means for carrying out waveform shaping on a distorted test pattern distorted to a specified distortion level and sent from said master unit; and
outputting means for distorting the waveform-shaped test pattern according to said specified distortion level and outputting the distorted waveform-shaped test pattern.
